# EUROPEAN PATENT SPECIFICATION

(11) **EP 2 226 210 B1**
(45) Date of publication and mention of the grant of the patent: **26.11.2014**
(21) Application number: 10380026.4
(22) Date of filing: 02.03.2010
(51) Int. Cl.: B60J 10/04, B60J 10/08, B60J 5/04

(54) **Weatherstrip bar for automobile doors**
Abdichtungsleiste für Pkw-Türen
Barre joint d'etanchéité pour portes d'automobile

(30) Priority: 02.03.2009 ES 200900405 U
(43) Date of publication of application: 08.09.2010
(73) Proprietor: Seat, S.A., 08760 Martorell, Barcelona (ES)
(72) Inventor: Veciana Sales, Rosa, 08760 Martorell Barcelona (ES); Sanchez Castillo, José Antonio, 08760 Martorell Barcelona (ES); Garcia Najar, Cesar, 08760 Martorell Barcelona (ES)
(74) Representative: Isern-Jara, Nuria

(56) References cited:
- WO-A1-01/87658
- DE-A1-102006 016 409
- JP-A- 2001 277 859
- US-A1- 2004 104 542

## Description

### FIELD OF THE INVENTION

The present invention refers to a weatherstrip bar for automobile doors, constituted by a metallic profile arranged between the door frame and the interior panel thereof and serving as support on which the weatherstrip is mounted.

### BACKGROUND OF THE INVENTION

In current automobiles the door weatherstrip bar serves as a means for mounting the weatherstrip which, together with the water scraper, pressures the glass surface preventing the entrance of water, dust, air, etc.

However, the weatherstrip bar traditionally used is approximately as long as the weatherstrip in order to essentially comply with the support function of said weatherstrip, and does not act as reinforcement and fixing means between the different door components.

An example of a weatherstrip bar is described in document US 2004/0104542.

### DESCRIPTION OF THE INVENTION

The object of the present invention is a weatherstrip bar constituted by a metallic profile which, besides serving as support for the weatherstrip, anchors the interior panel of the door to the weatherstrip, constituted by a rubber profile, as well as to the door frame.

Another object of the invention is to reinforce the weatherstrip bar profile and give it means to secure the position of the upper dust seal.

According to the invention, the weatherstrip bar comprises a metallic profile which is longer than the weatherstrip and protrudes from it by both sides in sections which are formed in such a way that they are inwardly coupled on the door interior panel. The profile section protruding on one side of the weatherstrip, towards the upper triangle of the door frame, has an upper lug which is coupled on said triangle and which is provided with a hole for the passage of a fixing screw to the triangle. The section of the weatherstrip bar protruding on the opposite side of the weatherstrip forms a tongue which can be faced and coupled to a clip of the interior panel of the door, for its mounting and fixing therein.

The sections of the weatherstrip bar protruding from the rubber profile constituting the weatherstrip also have, on the side directed towards the door panel, reinforcement transverse ribs or partitions which define means to secure the position of the upper dust seal.

With the constitution described, the metallic profile constituting the weatherstrip bar of the invention is fixed at one end to the upper triangle of the door frame while at the other end it is fixed, through the aforementioned tongue, to the clip of the interior door panel, to which it is also joined by welding. As for the metallic profile constituting the weatherstrip bar of the invention, it serves as an anchoring means of the rubber forming the weatherstrip which, in turn, is anchored on the door frame, thus being integrally joined to the different door components.

### BRIEF DESCRIPTION OF THE DRAWINGS

The attached drawings show an embodiment of the weatherstrip bar of the invention which is presented as a non-limiting example thereof, wherein:
Figure 1 is a perspective exploded view of an automobile door including the weatherstrip bar of the invention.
Figure 2 is a perspective view of the metallic profile constituting the weatherstrip of the invention.
Figure 3 is a perspective higher-scale view of the end sections of the weatherstrip bar of figure 2.
Figure 4 is a perspective rear view of the weatherstrip bar.
Figure 5 is an elevated interior view of a door mounted with the weatherstrip of the invention.
Figure 6 is a partial vertical sectional view of the door, taken according to the cutting line VI-VI of figure 5.
Figure 7 is a partial vertical sectional view of the door, taken according to the cutting line VII-VII of figure 5.
Figure 8 is a perspective partial sectional view of the interior panel of the door with the weatherstrip bar coupled thereto.
Figure 9 is a vertical sectional view of the door, taken according to the cutting line IX-IX of figure 8.

### DETAILED DESCRIPTION OF AN EMBODIMENT

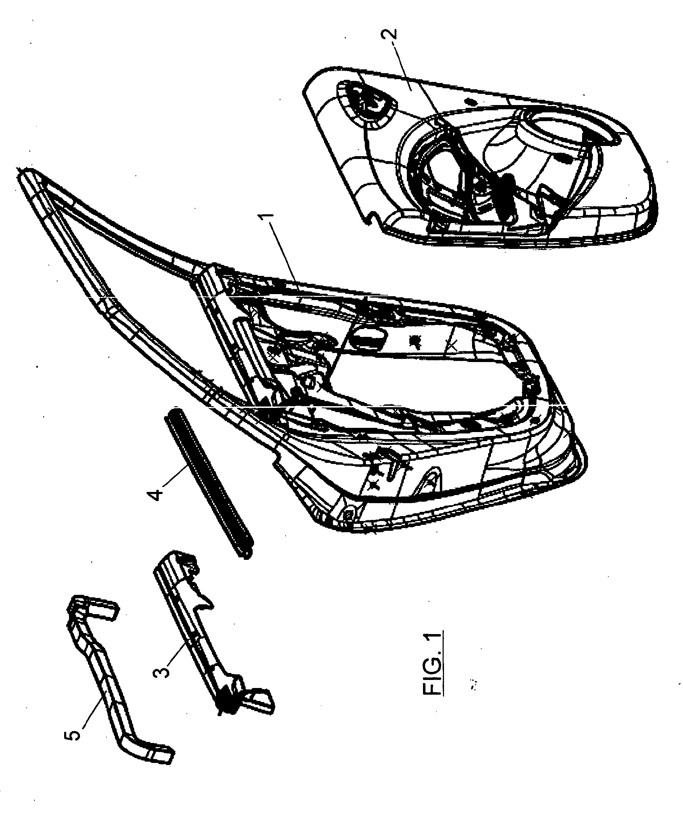

Figure 1 is a perspective exploded view of all the different components of an automobile door, including a frame 1 on which a panel 2 is interiorly coupled and between which there is a weatherstrip bar 3 serving as support for a rubber profile 4 constituting the weatherstrip itself and under which there is a dust seal 5.

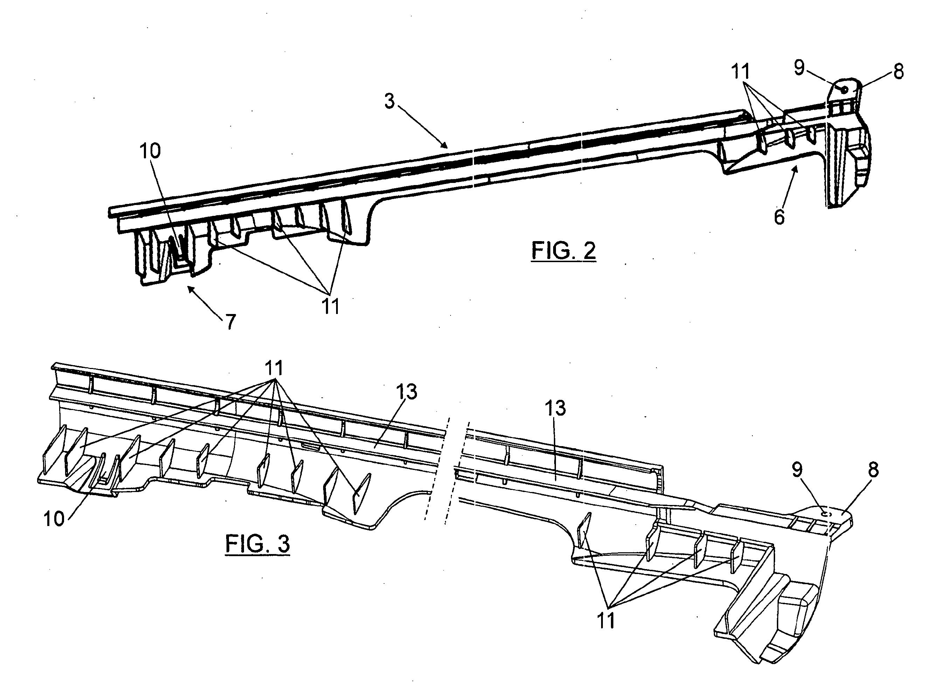

Figures 2 to 4 show the weatherstrip bar of the invention, which is longer than the rubber profile weatherstrip 4, protruding from it in end sections 6 and 7, which are adapted to couple on the panel 2 inner surface.

The end section 6 of the weatherstrip 3 profile adopts an inverted L shape and has on its upper part a lug 8 having a hole 9. On the opposite side, section 7 forms a tongue 10. Besides there are reinforcement transverse ribs or partitions 11 crossing sections 6 and 7 which will serve to secure the position of the dust seal 5.

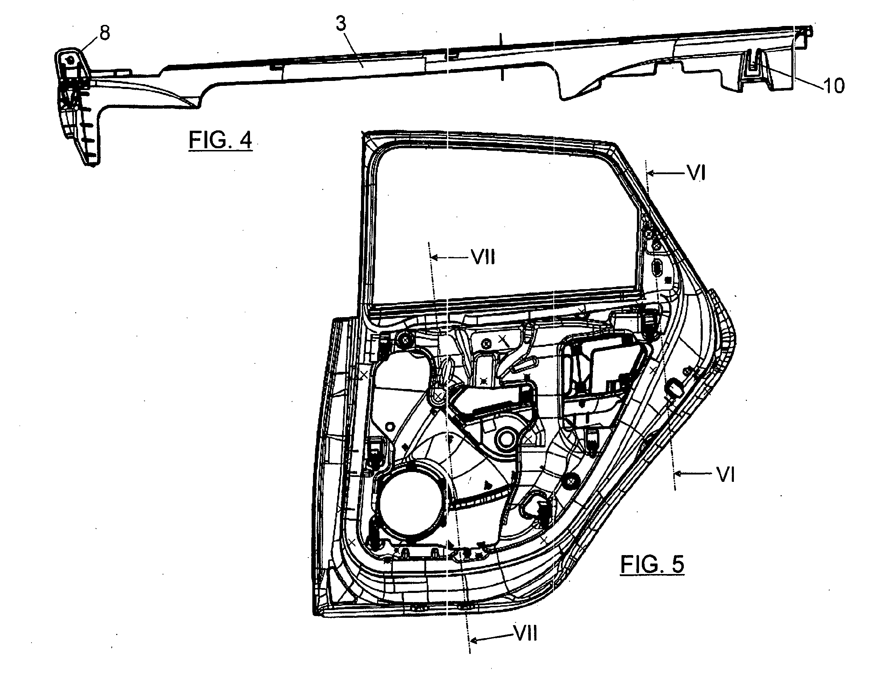

Figure 3 shows how the section 6 of the weatherstrip bar 3 is coupled to the internal surface of the panel 2 and how the upper lug 8 is coupled on the upper triangle of the door, figure 5, to be fixed thereto by a screw inserted through the hole 9 of said lug.

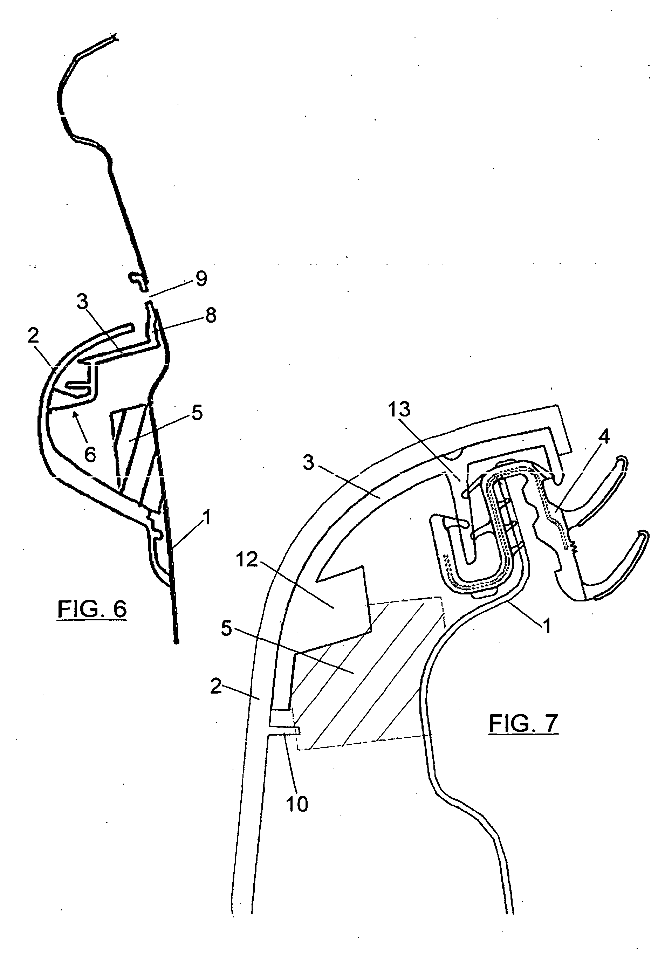

Figure 7 shows how the profile constituting the weatherstrip bar 3 is coupled to the internal surface of the panel 2, the dust seal 5 being coupled on the longitudinal rib 12 of the weatherstrip bar 3 and also on the transverse ribs or partitions 11. The weatherstrip bar 3 has a longitudinal wing 13 on which and on the upper edge of the door frame 1 the rubber profile constituting the weatherstrip 4 is mounted.

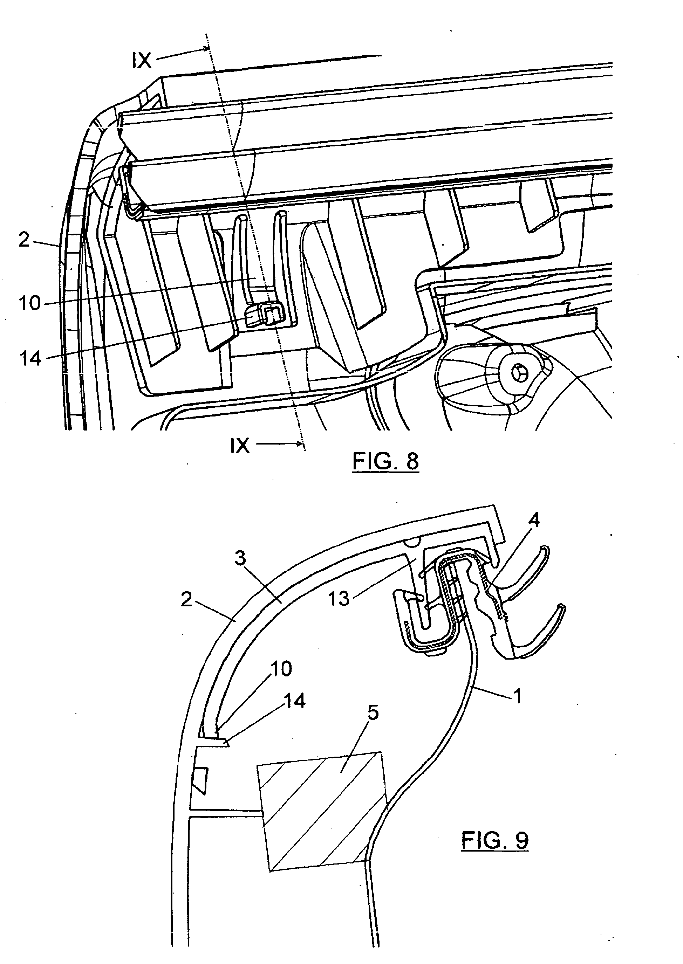

As it can be seen in figures 8 and 9, the tongue 10 of the weatherstrip bar 3 can be faced and coupled on a clip 14 protruding from the internal surface of the panel 2. The weatherstrip profile 3 can also be joined to the panel 2 through welding which, together with the end sections in which said profile extends with respect to the rubber profile constituting the weatherstrip 4, enables to attain a perfect fastening and mounting between the different components, since the weatherstrip profile is perfectly attached to the panel 2 and the door frame 1, through the lug 8 and through the rubber profile constituting the weatherstrip 4.

With the weatherstrip bar of the invention it is guaranteed that the perimeter of the panel body 2 fixes correctly onto the door frame 1. The geometry achieved is more robust, thus securing the panel 2 belt, securing the fixing through adhesive of the dust seal, through the transverse ribs or partitions 11 and admits, since it is a welded part, to reinforce the assembly and without producing marks on the visible surface of the panel 2.

## Claims

1. Weatherstrip bar (3) for automobile doors, constituted by a metallic profile which is arranged between the door frame (1) and the interior panel (2) thereof and on which the rubber profile (4) constituting the weatherstrip is mounted, **characterized in that** said metallic profile is longer than the weatherstrip rubber profile (4) and protrudes from it by both sides in sections which can be inwardly coupled on the door interior panel (2), and which have, on one side an upper lug (8) which can be adapted onto the upper triangle of the door frame and which is provided with a hole (9) for the passage of a fixing screw to the triangle, while on the opposite side it forms a tongue (10) which can be faced and coupled to a clip of the interior door panel (2), and **in that** the aforementioned sections also have, on the side directed towards the door panel, reinforcement transverse ribs (11) or partitions which define means to secure the position of the upper dust seal (5).

## Patentansprüche

1. Abdichtungsleiste (3) für Automobiltüren, die aus einem Metallprofil gebildet ist, welches zwischen dem Türrahmen (1) und der Innenwand (2) desselben angeordnet ist und auf welchem das Gummiprofil (4), das die Dichtung bildet, montiert ist, **dadurch gekennzeichnet, dass** das besagte Metallprofil länger ist als das Dichtungsprofil (4) aus Gummi und von demselben in Abschnitten hervorragt, die nach innen mit der inneren Türwand (2) gekoppelt werden können, und die auf einer Seite einen oberen Ansatz (8) aufweisen, der dazu geeignet ist, an das obere Dreieck des Türrahmens angepasst zu werden, und der mit einem Loch (9) für die Durchführung einer Befestigungsschraube am Dreieck versehen ist, während er auf der entgegengesetzten Seite eine Zunge (10) bildet, die dazu geeignet ist, sich einer Lasche der inneren Türwand (2) gegenüber zu befinden und mit ihr verbunden zu werden; und dadurch, dass die zuvor erwähnten Abschnitte auf der der Türwand gegenüberliegenden Seite auch Querrippen (11) oder Bereiche zur Verstärkung aufweisen, die Mittel definieren, die dazu bestimmt sind, die Lage der oberen Staubdichtung (5) zu sichern.

## Revendications

1. Barre joint d'étanchéité pour des portes d'automobile, constituée par un profil de métal qui est agencé entre l'encadrement de porte (1) et la paroi intérieure (2) de celui-ci, et sur lequel est monté le profil de caoutchouc (4) qui constitue le joint d'étanchéité, **caractérisée en ce que** ledit profil de métal est plus long que le profil de caoutchouc (4) qui constitue le joint d'étanchéité, et fait saillie hors de celui-ci dans les deux côtés dans des sections qui peuvent être adaptées vers l'intérieur sur la paroi intérieure (2) de la porte, et qui présentent sur un côté un épaulement supérieur (8) qui peut être adapté sur le triangle supérieur de l'encadrement de porte et qui est pourvu d'un trou (9) pour le passage d'un vis de fixation au triangle, tandis que sur le côté opposé il forme une languette (10) qui peut être positionnée vis-à-vis à une bride de la paroi intérieure (2) de porte à laquelle elle peut être accrochée; et **en ce que** les sections mentionnées, sur le côté dirigé vers la paroi de la porte, présentent aussi des nervures transversales ou cloisons de renforcement (11) qui définissent des moyens servant à prémunir la position du joint supérieur d'étanchéité (5) contre la poussière.
